**Europäisches Patentamt**

**European Patent Office**

**Office européen des brevets**

(19)

(11) Veröffentlichungsnummer : **0 170 857
B1**

# (12) EUROPÄISCHE PATENTSCHRIFT

(45) Veröffentlichungstag der Patentschrift :
02.03.88

(21) Anmeldenummer : **85107880.8**

(22) Anmeldetag : **25.06.85**

(51) Int. Cl.⁴ : **G 02 B 21/20**, G 02 B 21/22

(54) **Mikroskop mit einem binokularen Tubus.**

(30) Priorität : **29.06.84 CH 3157/84**

(43) Veröffentlichungstag der Anmeldung :
**12.02.86 Patentblatt 86/07**

(45) Bekanntmachung des Hinweises auf die Patenterteilung : **02.03.88 Patentblatt 88/09**

(84) Benannte Vertragsstaaten :
**AT CH DE FR GB IT LI**

(56) Entgegenhaltungen :
**DE-A- 3 318 011
FR-A- 1 107 626
US-A- 1 818 974
US-A- 3 173 984**

(73) Patentinhaber : **WILD HEERBRUGG AG.**
**CH-9435 Heerbrugg (CH)**

(72) Erfinder : **Fehr, Erwin**
**Gartenstrasse 14**
**CH-9435 Heerbrugg (CH)**
Erfinder : **Schaefer, Andreas, Dr.**
**Sonnenstrasse 1**
**CH-9436 Balgach (CH)**

(74) Vertreter : **EGLI-EUROPEAN PATENT ATTORNEYS**
**Horneggstrasse 4**
**CH-8008 Zürich (CH)**

## Beschreibung

Die vorliegende Erfindung betrifft ein Mikroskop mit einem binokularen Tubus.

Ein derartiges Mikroskop ist in DE-C-25 25 798 (Wild Heerbrugg AG) beschrieben. Dieses Mikroskop kann vor allem als Stereomikroskop verwendet werden. Dem binokularen Tubus ist ein für die beiden Beobachtungskanäle des Mikroskops gemeinsames Objektiv, das Hauptobjektiv, vorgeschaltet. Das Hauptobjektiv kann seitlich so weit verschoben werden, bis die optische Achse dieses Hauptobjektivs mit der optischen Achse eines der Teilsysteme des optichen Zwillingssystems zusammenfällt. Dadurch wird die Bildqualität in diesem Teilsystem beträchtlich gesteigert.

In der Praxis gibt es allerdings Fälle, in welchen man eine bestimmte Stelle des Objektes, die durch das Hauptobjektiv abgebildet wird, wesentlich vergrössert beobachten möchte. Für solche Fälle ist das genannte Mikroskop ungeeignet.

Die Aufgabe der vorliegenden Erfindung ist, diesen und noch weitere Nachteile des bekannten Mikroskops zu beseitigen.

Diese Aufgabe wird beim Mikroskop der eingangs genannten Art erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt :

Fig. 1 in einer Seitenansicht eine erste Ausführungsform des vorliegenden Mikroskops mit zwei Objektiven, bei dem das erste Objektiv dem übrigen Teil des optischen Systems vorgeschaltet ist,

Fig. 2 das Mikroskop nach Fig. 1, bei dem das zweite Objektiv dem übrigen Teil des optischen Systems vorgeschaltet ist,

Fig. 3 in einer Frontansicht den unteren Abschnitt des Mikroskops nach Fig. 1, wobei aus diesem Mikroskopabschnitt die Lage eines Strahlenteilers in bezug auf das zweite Objektiv sowie in bezug auf weitere optische Teile des Mikroskops ersichtlich ist,

Fig. 4 den Strahlengang im Mikroskop nach Fig. 1, wenn sich das Hauptobjektiv des Mikroskops in seiner zur Stereobeobachtung geeigneten Lage befindet,

Fig. 5 den Strahlengang im Mikroskop nach Fig. 1, wenn das Objektiv des klassischen Mikroskops samt dem Strahlenteiler dem übrigen Teil des optischen Systems vorgeschaltet ist,

Fig. 6 schematisch das Mikroskop nach Fig. 1, bei dem eine Längenmesseinrichtung an das Hauptobjektiv angeschlossen ist und

Fig. 7 dass Mikroskop nach Fig. 6, bei dem das Hauptobjektiv aus seiner zentrischen Lage um einen bestimmten und mit Hilfe der Längenmesseinrichtung messbaren Betrag verschoben ist.

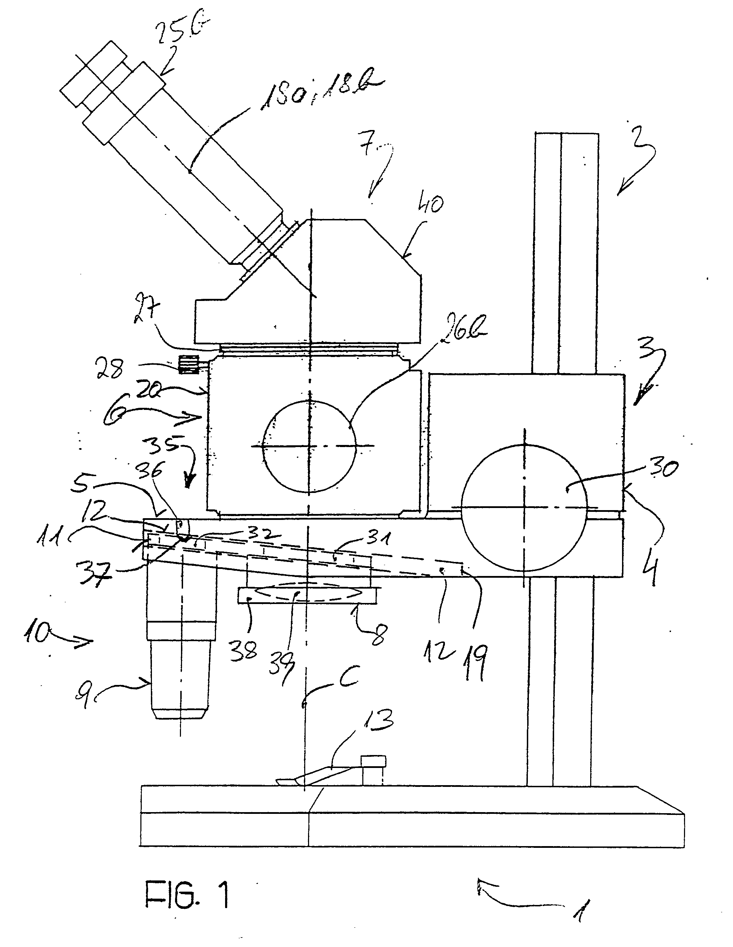

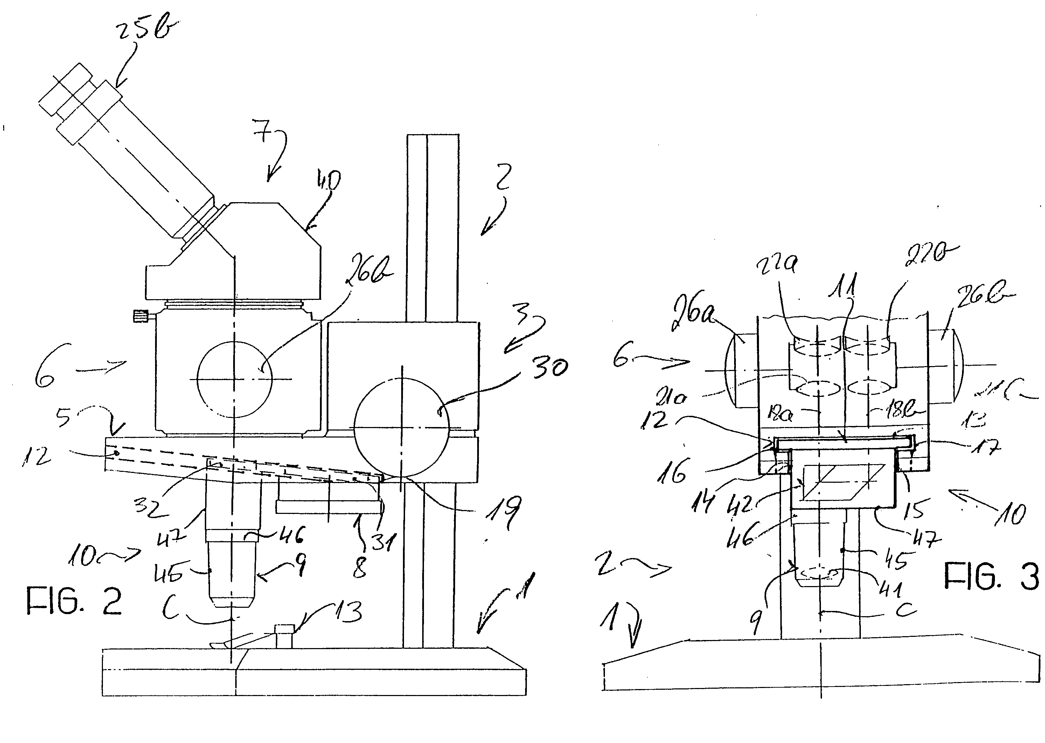

Das Mikroskop nach Fig. 1 weist ein Stativ 1 auf, das im vorliegenden Fall als eine Platte ausgeführt ist. Auf diesem Stativ 1 ist eine Profilsäule 2 aufgerichtet, entlang welcher ein Triebkasten 3 vertikal bewegbar ist. Der Triebkasten 3 ist im wesentlichen L-förmig, wobei die vertikal verlaufende Partie bzw. der. vertikale Schenkel 4 desselben hohl ist und die Profilsäule 2 umgibt. In dieser ersten Partie 4 des Triebkastens 3 sind an sich bekannte Mittel (nicht dargestellt) zur Verschiebung des Triebkastens 3 entlang der Profilsäule 2 untergebracht. Von diesen Mitteln ist nur eines der Bedienungselemente bzw. -knöpfe 30 für die sonst nicht dargestellten Mittel in Fig. 1 und 2 abgebildet. Auf dem horizontalen Schenkel 5 des praktisch L-förmigen Triebkastens 3, der hier auch als eine zweite Partie des Triebkastens 3 bezeichnet wird und der flach, vorteilhaft als eine Zunge, ausgebildet ist, ist ein Optikträger 6 angebracht, auf dem ein binokularer Tubus 7 sitzt. Im Optikträger 6 und im binokularen Tubus 7 befinden sich die Elemente eines optischen Zwillingssystems. Der horizontale Schenkel 5 des Triebkastens 3, der als Träger für die übrigen Bestandteile 6 und 7 des Mikroskops dient, ist mit einem Wechsler 10 für Objektive 8 und 9 des Mikroskops versehen. Dieser Wechsler 10 kann als eine Verschiebeeinrichtung ausgeführt sein, die im Nachstehenden näher beschrieben ist.

Auf der Oberseite des Stativs 1 befinden sich Objektklammern 13, von welchen nur die rechte Objektklammer dargestellt ist. In Fig. 3 bis 7 sind mit 18a und 18b die optischen Achsen bzw. Strahlengänge des jeweiligen Teilsystems bzw. der jeweiligen Hälfte des Zwillingsoptiksystems bezeichnet.

Der Optikträger 6 weist ein im wesentlichen zylinderförmiges Gehäuse 20 auf, in dem sich Linsen 21a, 21b, 22a und 22b befinden. Auf diese folgen Bildaufrichtprismen 23a und 23b (Fig. 3 bis 7), welche zusammen die Optikelemente eines Vergrösserungswechsler- und Tubus-Linsensystems darstellen. Auf die Prismen 23a und 23b folgen die Zwischenbildebenen 24a und 24b sowie die Okulare 25a und 25b. Die Betätigung der optischen Elemente des Vergrösserungswechslers erfolgt mit Hilfe von Betätigungsknöpfen 26a und 26b. Der Index a bei den genannten Bezugsziffern bezeichnet die linke und der Index b die rechte Hälfte des Optiksystems bzw. den linken und rechten Beobachtungskanal. Der binokulare Tubus 7 weist ein Gehäuse 40 auf und dieses ist mit seiner unteren, etwa rohrförmigen Partie 27 in das Gehäuse 20 des Optikträgers 6 eingesetzt. Mit Hilfe einer Schraube 28 kann der Tubus 7 auf dem Träger 6 befestigt sein. Am Gehäuse 40 von binokularem Tubus 7 sind die bereits erwähnten Okulare 25a und 25b befestigt, während in diesem Gehäuse 40 sich unter anderem die Bildaufrichtprismen 23a und 23b befinden.

Der in den Fig. 1 bis 3 dargestellte Objektivwechsler 10 ist als eine Verschiebeeinrichtung ausgeführt, obwohl dieser Wechsler 10 auch als ein Objektivrevolver ausgeführt sein kann. Die Verschiebeeinrichtung 10 weist einen plattenförmigen Schlitten 11 auf, an dessen Unterseite die Objektive 8 und 9 befestigt sind. Der Schlitten 11 ist länglich ausgeführt und die Objektive 8 und 9 sind hintereinander in der Längsrichtung des Schlittens 11 auf diesem angebracht. Die Platte 11 weist durchgehende Oeffnungen 31 und 32 auf, durch welche das von den Objektiven 8 und 9 anfallende Licht in den übrigen Teil 21a bis 25b der Mikroskopoptik gelangen kann.

In der zweiten, flachen Partie 5 des Triebkastens 3, auf der die Bestandteile 6 und 7 des Mikroskops ruhen, ist eine Führungsausnehmung 12 für den Schlitten 11 ausgeführt. Diese Führungsausnehmung 12 mündet vorne in der freien Stirnseite der Zunge 5. Der Querschnitt dieser Ausnehmung 12 ist aus Fig. 3 ersichtlich. Die Ausnehmung 12 hat einen flachen Boden 13 und von diesem Boden 13 weg erstrecken sich etwa rechtwinklig dazu Seitenwände 14 und 15, so dass sich diese Ausnehmung 12 eigentlich nach unten öffnet. Die Seitenwände 14 und 15 sind im sich an den Boden 13 anschliessenden Bereich mit parallel zum Boden 13 verlaufenden Rillen 16 und 17 mit einem praktisch rechteckigen Querschnitt versehen. In diesen Rillen 16 und 17 liegen Randpartien der den Schlitten 11 bildenden Platte. Die Platte 11 kann in der Längsrichtung der Rillen 16 und 17 bewegt werden. Im Inneren der Zunge 5 endet die Ausnehmung 12 mit einer Endwand 19 (Fig. 2), an der die Platte 11 anschlagen kann. Diese Lage der Platte 11 kann zur genauen Positionierung einer der beiden Objektive 8 bzw. 9, im vorliegenden Fall des zweiten Objektivs 9, ausgenützt werden, wenn dieses in seine Arbeitsstellung gebracht werden soll.

Wegen dem meist sehr geringen Arbeitsabstand eines klassischen Mikroskopobjektivs ist es zweckmässig, den Wechsler 10 so zu gestalten, dass das Objektiv 9 für die hohe Vergrösserung beim Umschalten auf Stereobeobachtung vom Objekt abgehoben wird. Dies kann durch Verschieben der Objektive 8 und 9 in einer schiefen Ebene oder, wie beim klassischen Mikroskop, mit einem Objektivrevolver erreicht werden. Für geringe Ansprüche können die Objektive 8 und 9 lediglich austauschbar sein.

Die Ausführung der Verschiebevorrichtung 10 für den ersten der vorstehend genannten Fälle ist aus Fig. 1 bis 3 ersichtlich. Besonders in diesem Fall ist eine Rastvorrichtung 35 für die Schlittenplatte 11 zweckdienlich. Diese kann einen abgefederten Stift 36 enthalten, dessen Spitze in einer in der Oberseite des Schlittens 11 ausgeführten Vertiefung 37 rasten kann. Der Stift 36 ist im endnahen Bereich der Zunge 5 angeordnet. Die Vertiefung 37 ist im vorderen Bereich des Schlittens 11 ausgeführt. Mit Hilfe einer solchen Rastvorrichtung 35 kann das Hauptobjektiv 8 leicht und sicher im Lichtpfad des Mikroskopes positioniert werden. Das zweite Objektiv 9 kann, wie bereits gesagt worden ist, durch den Anschlag des Schlittens 11 an der Endwand 19 der Ausnehmung 12 positioniert werden.

Das Hauptobjektiv 8, das zur stereoskopischen Beobachtung eines Objektes geeignet ist, weist eine etwa rohrförmige Fassung 38 auf, die am Schlitten 11 befestigt ist und die die Objektivlinse bzw. ein Linsensystem 39 enthält. Innerhalb dieser Fassung 38 liegt auch die bereits genannte Durchgangsöffnung 31 in der Platte 11. Das zweite Objektiv 9 weist eine Fassung 45 auf, in der die Linsen 41 eines klassischen Mikroskopobjektivs untergebracht sind. Ein Strahlenteiler 42 mit einem Teilerprisma 43 und einem Umlenkprisma 44 befindet sich zwischen dem zweiten Objektiv 9 und dem Vergrösserungswechsler 21a bis 22b im Optikträger 6. Hierbei ist der Strahlenteiler 42 so angeordnet, dass seine Eintrittspartie, welche das Teilerprisma 43 aufweist, den Objektivlinsen 41 zugeordnet ist. Die erste Austrittspartie des Strahlenteilers 42, die das Teilerprisma 43 enthält, befindet sich im zweiten Beobachtungskanal b, während die zweite Austrittspartie des Strahlenteilers 42, die sich am freien Ende des Umlenkprismas 44 befindet, dem ersten Beobachtungskanal a zugeordnet ist. Der Strahlenteiler 42 ist in einem Gehäuse 47 untergebracht, das mit Hilfe einer Verschraubung 46 mit dem Gehäuse 45 des zweiten Objektivs 9 wegnehmbar verbunden ist. Das Gehäuse des Strahlenteilers 42 ist etwa quaderförmig, es ist an der Schlittenplatte 11 befestigt und es umgibt die bereits erwähnte zweite Durchgangsöffnung 32 in der Platte 11.

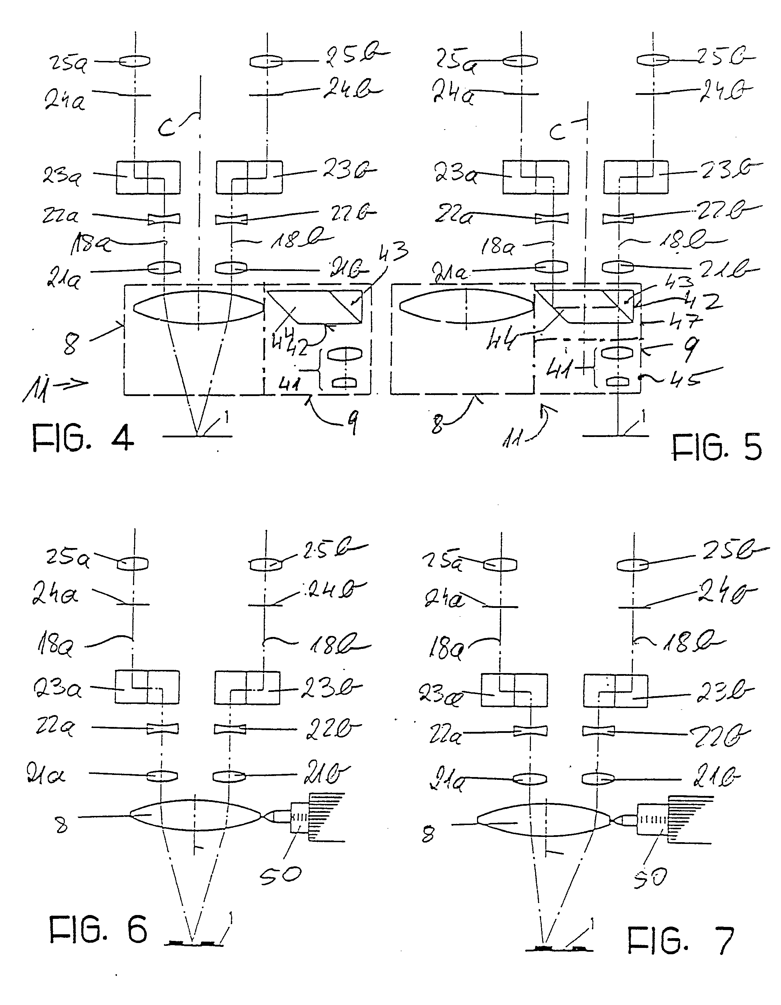

Da die beiden Objektive 8 und 9 mit dem Schlitten 11 ein Ganzes bilden, das zur Verschiebeinrichtung 10 gehört, sind die genannten Bestandteile des Mikroskops in den Fig. 4 und 5 von einem mit strichlierter Linie ausgeführten Rahmen umgeben. Die zwei Objektive 8 und 9 sind dabei mit Hilfe einer strichpunktierten Linie voneinander getrennt. Aus Zeichnungsgründen und weil Fig. 4 und 5 nur schematisch sind, sind die Objektive 8 und 9 in diesen Figuren so angeordnet, als wenn sie in der Ebene der Strahlengänge 18a und 18b verschiebbar wären. In der Tat entspricht die schematische Darstellung aus Fig. 4 dem Darstellungsinhalt von Fig. 1, während Fig. 5 die in Fig. 2 bzw. 3 gezeigte Position des Schlittens 11 der Verschiebevorrichtung 10 schematisch wiedergibt.

Ein solches Mikroskop gestattet es, mit einem Handgriff von normaler stereoskopischer Beobachtung auf binokulare Beobachtung bei viel höherer Vergrösserung umzuschalten. Gegenüber dem bekannten klassischen Mikroskop ist das Bild aufrecht und seitenrichtig. Die Uebersichtsbeobachtung kann somit stereoskopisch und bei grösserem Gesichtsfeld erfolgen und der Uebergang zum genaueren Beobachten derselben Stelle des Objektes kann durch blosses Verschieben der Objektive bewerkstelligt werden. Durch eine geeignete Wahl der Neigung der Führungsöffnung 12 im Triebkasten 3 kann beispielsweise erreicht werden, dass die Schärfe des Bildes gleichbleibend ist unabhängig davon, welches der Objektive sich in der optischen Achse C des Mikroskops befindet.

Dieses Instrument eignet sich deshalb hervorragend als Schul- und Hobbymikroskop, aber auch für die Qualitätskontrolle in der Industrie. Bei stereoskopischer Uebersichtsbeobachtung kann ein Prüfling schnell durchgemustert werden.

Mögliche Fehlerstellen können sofort bei hoher Vergrösserung beurteilt werden.

Die vorstehend beschriebene Verschiebbarkeit der Objektive 8 und 9 des Mikroskops eröffnet die Möglichkeit, am beobachteten Objekt Strecken zu messen. Ein entsprechendes Ausführungsbeispiel des vorliegenden Mikroskops ist in den Fig. 6 und 7 schematisch dargestellt. Das erste Objektiv 8, das zur stereoskopischen Beobachtung des Objektes dient, ist mit einer Längenmesseinrichtung 50 gekoppelt. Als solche kann ein Massstab mit Noniusablesung, eine Mikrometerschraube, eine mechanische Messuhr, ein elektronischer Messfühler mit Digitalanzeige usw. dienen. Im dargestellten Beispiel dient eine Mikrometerschraube 50 der Längenmessung. Die Verwendung einer Mikrometerschraube bietet einen zusätzlichen Vorteil, nämlich, dass diese auch zum Antrieb der Objektivverschiebung verwendet werden kann. Ferner ist ein Fadenkreuzokular zu verwenden. Werden mit dem Fadenkreuzokular nacheinander zwei Punkte des Objektes angezielt, so entspricht die zwischen den beiden Zielungen vorgenommene Objektivverschiebung exakt der Strecke zwischen den beiden Punkten. Es versteht sich, dass solche Messungen auch dann durchgeführt werden können, wenn der Wechsler 10 kein zweites Objektiv aufweist.

Wenn zwei Längenmesseinrichtungen 50, die mit dem Hauptobjektiv 8 gekoppelt sind, rechtwinklig zueinander angeordnet sind und wenn die Verschiebeinrichtung 10 Bewegungen in einer horizontalen Ebene erlaubt, dann können Objekte in zwei Koordinatenrichtungen, beispielsweise in der X- und Y-Richtung, gleichzeitig vermessen werden. Als eine solche Verschiebeinrichtung kann ein Kreuztisch einer bekannten Art verwendet werden.

Gegenüber der Messmethode mit einem Okularschraubenmikrometer entstehen keine Fehler, die durch die Verzeichnung des Optiksystems verursacht sind. Zudem ist keine neue Eichung notwendig, nachdem die Vergrösserung gewechselt worden ist. Die zu messende Strecke kann ausserdem grösser sein als das Gesichtsfeld. Gegenüber Messmikroskopen mit Objekt- oder Tubusverschiebung ist die zu bewegende Masse beim vorliegenden Mikroskop geringer.

**Patentansprüche**

1. Mikroskop mit einem binokularen Tubus bei dem die Okularachsen parallel zueinander verlaufen, dadurch gekennzeichnet, dass mindestens zwei Objektive (8, 9) auf einem Objektivwechsler (10) angeordnet sind mit dessen Hilfe wahlweise eines der Objektive (8, 9) dem übrigen Teil des Optiksystems des Mikroskops vorgeschaltet werden kann, dass eines dieser Objektive (8) zur Stereobeobachtung geeignet ist, und dass ein zweites Objektiv (9) nur in einer Position benützbar ist, in der dessen optische Achse mit der optichen Achse (18a bzw. 18b) eines Teilsystems (a oder b) des optischen Zwillingssystems des Mikroskops zusammenfällt.

2. Mikroskop nach Anspruch 1, dadurch gekennzeichnet, dass das zweite Objektiv (9) eine kürzere Brennweite als das erste Objektiv (8) hat und insbesondere als klassisches Mikroskop objektiv ausgebildet ist.

3. Mikroskop nach Anspruch 1, dadurch gekennzeichnet, dass zwischen dem Objektivwechsler (10) und dem binokularen Tubus (7) sich ein Optikträger (6) befindet, welcher einen Vergrösserungswechsler (21a, 21b, 22a, 22b ; 26a und 26b) enthält und auf dem der binokulare Tubus (7) ruht.

4. Mikroskop nach Anspruch 3, mit einem Triebkasten (3) und einer Profilsäule (2), die auf einem Stativ aufgerichtet ist, dadurch gekennzeichnet, dass der Triebkasten (3) eine erste Partie (5) aufweist, die die Profilsäule (2) umgibt, dass an diese erste Partie (4) sich eine zweite Partie (5) des Triebkastens (3) anschliesst, die flach, vorteilhaft als eine Zunge, ausgebildet ist, dass auf dieser zweiten Partie (5) des Triebkastens (3) der Optikträger (6) ruht und dass an der Unterseite dieser zweiten Partie (5) die Objektive (8, 9) angeordnet sind.

5. Mikroskop nach Anspruch 3, dadurch gekennzeichnet, dass ein Strahlenteiler (42) sich zwischen dem zweiten Objektiv (9) und dem Optikträger (6) im Strahlengang des zweiten Objektivs (9) befindet und dass die Fassung (45) des zweiten Objektivs (9), das vorteilhaft ein klassisches Mikroskopobjektiv ist, an ein Gehäuse (47) zur Aufnahme des Strahlenteilers (42) wegnehmbar, anschliessbar ist, vorteilhaft mit Hilfe einer Schraubverbindung (46).

6. Mikroskop nach Anspruch 1, dadurch gekennzeichnet, dass der Objektivwechsler (10) so ausgeführt ist, dass die Objektive (8, 9) in einer Ebene bewegbar sind, die zur Symmetrieachse C des Optikträgers (6) senkrecht liegt.

7. Mikroskop nach Anspruch 6, dadurch gekennzeichnet, dass der Objektivwechsler (10) als eine Verschiebeinrichtung ausgeführt ist und dass diese Verschiebeinrichtung mit einer Längenmesseinrichtung (50) gekoppelt ist.

8. Mikroskop nach Anspruch 4, dadurch gekennzeichnet, dass der Objektivwechsler (10) einen Schlitten (11) aufweist, der die Objektive (8, 9) trägt und dass der Schlitten (11) im objektnahen Teil des Mikroskops, vorteilhaft im zweiten Teil (5) des Triebkastens (3), verschiebbar ist.

9. Mikroskop nach Anspruch 8, dadurch gekennzeichnet, dass der Schlitten (11) in Richtung zur Profilsäule (2) hin und zurück, gegebenenfalls in einer schräg abwärts verlaufenden Richtung, verschiebbar ist.

10. Mikroskop nach Anspruch 8, dadurch gekennzeichnet, dass eine Rastvorrichtung (35) für die meistgebrauchten Positionen des Schlittens (11) vorgesehen ist, wobei diese Rastvorrichtung vorzugsweise einen in der zungenförmigen Partie (5) des Triebkastens (3) eingelassenen und abgefederten Stift (36) aufweist und der Objektivschlitten (11) mit wenigstens einer Vertiefung (37) an jener Stelle versehen ist, welche den vorgesehenen arretierten Lagen der Objektive (8, 9) entsprechen.

## Claims

1. Microscope with a binocular tube in which the eyepiece axes are parallel to one another, characterized in that at least two objectives (8, 9) are arranged on one objective changer (10), with the aid of which, as desired, one of the objectives (8, 9) can be connected upstream of the remainder of the microscope optical system, that one of these objectives (8) is suitable for stereo viewing and that a second objective (9) is only usable in a position in which its optical axis coincides with the optical axis (18a or 18b) of a partial system (a or b) of the optical twin system of the microscope.

2. Microscope according to claim 1, characterized in that the second objective (9) has a shorter focal length than the first objective (8) and in particular can be constructed as a conventional microscope objective.

3. Microscope according to claim 1, characterized in that between the objective changer (10) and the binocular tube (7) is located an optical support (6), which contains a magnification changer (21a, 21b, 22a, 22b, 26a, 26b) and on which rests the binocular tube (7).

4. Microscope according to claim 3 with a rack and pinion housing (3) and a profile column (2), which is erected on a stand, characterized in that the rack and pinion housing (3) has a first portion (4) surrounding the profile column (2), that to said first portion (4) is connected a second portion (5) of the rack and pinion housing (3), which is flat and advantageously constructed as a tongue, that on said second portion (5) of the rack and pinion housing (3) rests the optical support (6) and that on the bottom of said second portion (5) are located objectives (8, 9).

5. Microscope according to claim 3, characterized in that a beam splitter (42) is located between the second objective (9) and the optical support (6) in the optical path of the second objective (9) and that the barrel (45) of the second objective (9), which is advantageously a conventional microscope objective, is removably connected to a casing (47) for receiving beam splitter (42), advantageously with the aid of a screw connection (46).

6. Microscope according to claim 1, characterized in that the objective changer (10) is constructed in such a way that objectives (8, 9) are movable in a plane, which is at right angles to the axis of symmetry C of the optical support (6).

7. Microscope according to claim 6, characterized in that the objective changer (10) is constructed as a displacement means and that the latter is coupled to a linear measuring instrument (50).

8. Microscope according to claim 4, characterized in that the objective changer (10) has a carriage (11), which carries objectives (8, 9) and that carriage (11) is displaceable in the microscope part close to the object and advantageously in the second part (5) of the rack and pinion housing (3).

9. Microscope according to claim 8, characterized in that the carriage (11) can be moved backwards and forwards in the direction of the profile column (2) and optionally in a downwardly sloping direction.

10. Microscope according to claim 8, characterized in that a locking device (35) is provided for the most used position of carriage (11), said locking device preferably having a spring-mounted spring (36) embedded in the tongue-like portion (5) of the rack and pinion housing (3) and the objective carriage (11) is provided with at least one depression (37) at that point corresponding to the locked positions of objectives (8 and 9).

## Revendications

1. Microscope comportant un tube binoculaire, dans lequel les axes oculaires sont parallèles entre eux, caractérisé en ce qu'au moins deux objectifs (8, 9) sont placés sur un changeur (10) d'objectifs, à l'aide duquel un des objectifs (8, 9) peut être placé au choix devant le reste du système optique du microscope ; qu'un de ces objectifs (8) convient pour l'observation stéréoscopique et qu'un deuxième objectif (9) est utilisable seulement dans une position (18a, 18b) d'un système partiel (a ou b) du système optique jumelé du microscope.

2. Microscope suivant la revendication 1, caractérisé en ce que le deuxième objectif (9) a une distance focale plus courte que celle du premier objectif (8) et qu'il est réalisé en particulier comme un objectif classique de microscope.

3. Microscope suivant la revendication 1, caractérisé en ce qu'entre le changeur (10) d'objectifs et le tube binoculaire (7) se trouve un support (6) d'optique, qui contient un changeur de grossissement (21a, 21b, 22a, 22b ; 26a et 26b) et repose sur le tube binoculaire (7).

4. Microscope suivant la revendication 3, comportant une boîte de mise au point (3) et une colonne profilée (2), montée sur un socle, caractérisé en ce que la boîte de mise au point (3) présente une première partie (4) entourant la colonne profilée (2) ; qu'à cette première partie (4) se raccorde une deuxième partie (5) de la boîte de mise au point (3), cette deuxième partie étant plate et avantageusement en forme de lamelle, que sur cette deuxième partie (5) de la boîte de mise au point (3) repose le support (6) d'optique et que sur le dessous de cette deuxième partie (5) les objectifs (8, 9) sont disposés.

5. Microscope suivant la revendication 3, caractérisé en ce qu'un dispositif de fractionnement des rayons (42) est placé entre le deuxième objectif (9) et le support (6) d'optique, dans le faisceau du deuxième objectif (9) et que la monture (45) du deuxième objectif (9), qui est avantageusement un objectif classique de microscope,

peut être raccordée d'une manière amovible, avantageusement à l'aide d'une liaison à vis (46), à un boîtier (47), destiné à recevoir le dispositif de fractionnement des rayons (42).

6. Microscope suivant la revendication 1, caractérisé en ce que le changeur (10) d'objectifs est réalisé de manière à ce que les objectifs (8, 9) soient déplaçables dans un plan perpendiculaire à l'axe de symétrie (C) du support (6) d'optique.

7. Microscope suivant la revendication 6, caractérisé en ce que le changeur (10) d'objectifs est un dispositif déplaçable et que ce dispositif déplaçable est couplé à un dispositif de mesure linéaire (50).

8. Microscope suivant la revendication 4, caractérisé en ce que le changeur (10) d'objectifs comporte un chariot (11) déplaçable dans la partie du microscope proche de la préparation, soit avantageusement dans la deuxième partie (5) de la boîte de mise au point (3).

9. Microscope suivant la revendication 8, caractérisé en ce que le chariot (11) est déplaçable vers la colonne profilée et en sens contraire ainsi que, le cas échéant, obliquement vers la base.

10. Microscope suivant la revendication 8, caractérisé en ce qu'il est prévu un dispositif d'encrantement (35) pour les positions les plus utilisées du chariot (11), ce dispositif d'encrantement présentant avantageusement un doigt élastique (36) engagé dans la partie en lamelle (5) de la boîte de mise au point (3) et que le chariot (11) à objectifs est muni d'au moins un creux (37) aux endroits qui correspondent aux positions bloquées prévues pour les objectifs (8, 9).

FIG. 1

FIG. 2

FIG. 3

0 170 857

FIG. 4

FIG. 5

FIG. 6

FIG. 7

3